# EUROPÄISCHE PATENTSCHRIFT

(11) **EP 1 164 280 B1**
(45) Veröffentlichungstag und Bekanntmachung des Hinweises auf die Patenterteilung: **03.09.2008**
(21) Anmeldenummer: 01112451.8
(22) Anmeldetag: 22.05.2001
(51) Int. Cl.: F02M 25/07

(54) **Luftansaugvorrichtung für eine Brennkraftmaschine**
Air intake device for a combustion engine
Dispositif d'admission d'air pour un moteur à combustion

(30) Priorität: 13.06.2000 DE 10028400
(43) Veröffentlichungstag der Anmeldung: 19.12.2001
(73) Patentinhaber: Pierburg GmbH, 41460 Neuss (DE)
(72) Erfinder: Heuer, Peter, 50259 Pulheim (DE); Hüsges, Hans-Jürgen, 47877 Willich (DE)
(74) Vertreter: Patentanwälte ter Smitten

(56) Entgegenhaltungen:
- EP-A- 0 622 533
- EP-A- 0 987 427
- DE-A- 4 240 239
- DE-A- 19 733 964
- DE-A- 19 812 702
- US-A- 4 147 141
- US-A- 5 617 726

## Beschreibung

Die Erfindung betrifft eine Luftansaugvorrichtung für eine Brennkraftmaschine mit einer Luftansaugleitung, die in ein Ansaugrohr mündet, von dem Einzelansaugkanäle zu Zylindern der Brennkraftmaschine führen, wobei das Ansaugrohr eine Abgasrückführeinrichtung mit einem Abgasrückführleitungssystem, einem Abgasrückführventil und einem Abgaskühler aufweist, derart, daß Abgas zur Luftansaugleitung rückführbar ist.

Eine derartige Luftansaugvorrichtung ist beispielsweise aus der US-3937196 bekannt. Des weiteren hat sich das Rückführen von gekühltem Abgas, insbesondere zum Senken von Emissionen bei Dieselmotoren, als sinnvoll erwiesen. Andererseits ist es aber beispielsweise in der Startphase des Motors durchaus erwünscht, warmes, also nicht gekühltes Abgas, in die Luftansaugleitung zurückzuführen, damit der Motor schneller auf die gewünschte Betriebstemperatur erwärmt werden kann. Dies ist mit einer Luftansaugvorrichtung gemäß dem bekannten Stand der Technik nicht möglich.

Hiervon ausgehend liegt der Erfindung die Aufgabe zugrunde, eine Luftansaugvorrichtung zu schaffen, die den o. g. Nachteil vermeidet.

Diese Aufgabe wird bei einer gattungsgemäßen Luftansaugvorrichtung dadurch gelöst, daß die Abgasrückführeinrichtung ein Schaltventil aufweist, das zwischen zwei Abgasrückführleitungen schaltbar ist, von denen eine Abgasrückführleitung den Abgaskühler aufweist. Hierdurch wird auf einfache und kostengünstige Weise die Möglichkeit geschaffen, abhängig von der jeweiligen Betriebsphase des Motors das Abgas gekühlt oder ungekühlt in die Luftansaugleitung der Brennkraftmaschine zurückzuführen. Hierzu kann das Schaltventil ebenso wie das Abgasrückführventil mit der On-board-Elektronik des Fahrzeuges auf bekannte Weise verbunden sein.

Ein Ausführungsbeispiel der Erfindung ist in der Zeichnung dargestellt und wird nachfolgend beschrieben.

Die Zeichnung zeigt:
- Figur 1: eine schematische Darstellung einer Abgasrückführeinrichtung innerhalb einer erfindungsgemäßen Luftansaugvorrichtung,
- Figur 2: eine Draufsicht auf eine erfindungsgemäße Luftansaugvorrichtung, und
- Figur 3: einen Schnitt durch die Luftansaugvorrichtung gemäß Figur 2.

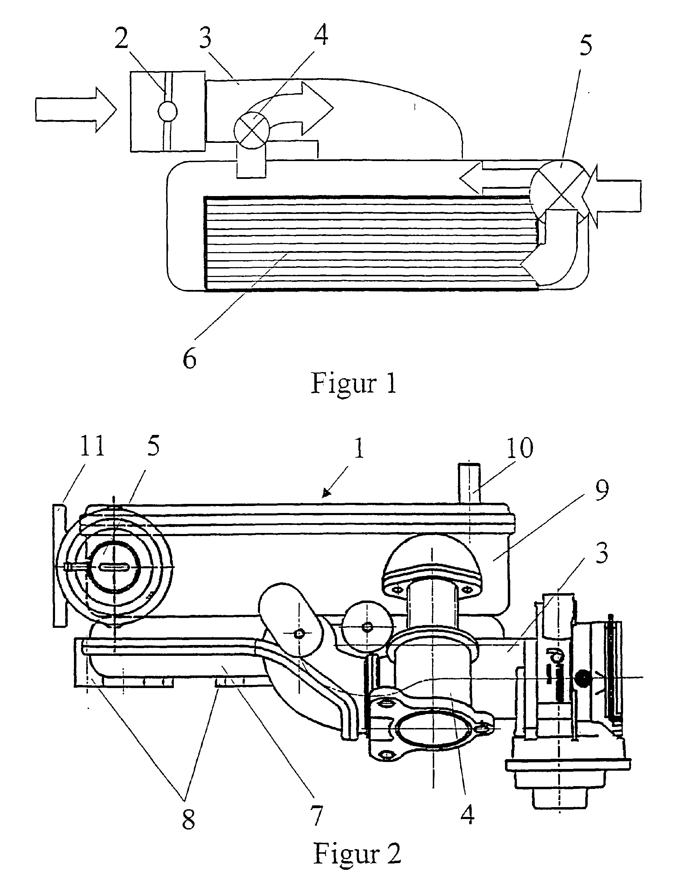

Figur 1 zeigt schematisiert die Abgasströmung durch die erfindungsgemäße Luftansaugvorrichtung 1. Hierbei wird Frischluft über eine bekannte Regelklappe 2 der Luftansaugleitung 3 zugeführt. Um die Schadstoffemission der Brennkraftmaschine zu verbessern, wird Abgas der Frischluft in der Luftansaugleitung 3 mittels eines Abgasrückführventils 4 zugeführt. Dabei kann das von der Brennkraftmaschine rückgeführte Abgas mittels eines Schaltelementes 5 durch einen Kühler 6 geleitet werden, um dann in die Ansaugleitung 3 rückgeführt zu werden, das Abgas kann aber auch beispielsweise in der Startphase der Verbrennungsmaschine direkt, ohne eine Umleitung über die Kühleinrichtung 6, der Ansaugleitung 3 zugeführt werden.

Figur 2 zeigt die erfindungsgemäße Luftansaugvorrichtung 1 in einer Draufsicht. Hierbei kann der Luftansaugleitung 3 Abgas mittels des Abgasrückführventiles 4 zugeführt werden. Das Abgas-/ Luftgemisch wird nachfolgend auf bekannte Weise durch ein Ansaugrohr 7 zu Einzelansaugkanälen 8 geleitet, die wiederum mit nicht dargestellten Zylindern der Brennkraftmaschine verbunden sind. Die Kühleinrichtung 6, ist im vorliegenden Fall in einem Gehäuseteil 9 der Luftansaugvorrichtung 1 angeordnet, wobei die Kühleinrichtung über Verbindungsstutzen 10 mit einem nicht dargestellten Kühlkreislauf der Verbrennungsmaschine verbunden ist. Des weiteren weist die Luftansaugvorrichtung eine Einlaßöffnung 11 auf, die über eine nicht dargestellte Leitung mit der Abgasseite der Brennkraftmaschine verbindbar ist. Das Schaltventil 5 gibt in einer ersten Stellung den direkten Weg zum Abgasrückführventil 4 und damit zur Rückführung von erwärmten Abgas in die Luftansaugleitung 3 frei, und in einer zweiten Stellung den Weg über den Kühler 6, durch den das rückzuführende Abgas gekühlt wird.

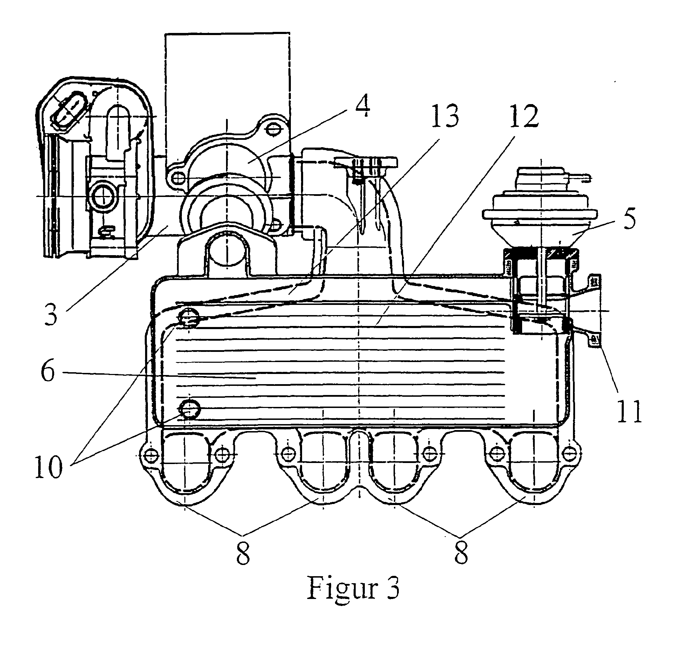

Figur 3 zeigt die erfindungsgemäße Ansaugvorrichtung 1 in einer Seitenansicht im Schnitt. Deutlich zu erkennen ist das beispielsweise pneumatisch angetriebene, zwischen zwei Stellungen zu verschiebende Schaltventil 5, das einerseits für zurückzuführendes Abgas eine Leitung 12 entlang der Kühlrippen eines Kühlers 6 und in der zweiten Stellung eine Leitung 13, die direkt zum Abgasrückführventil 4 führt, freigeben kann.

## Patentansprüche

1. Luftansaugvorrichtung für eine Brennkraftmaschinen mit einer Luftansaugleitung, die in ein Ansaugrohr mündet, von dem Einzelansaugkanäle zu Zylindern der Brennkraftmaschine führen, wobei das Ansaugrohr in einem Gehäuse eine Abgasrückführeinrichtung mit einem Abgasrückführleitungssystem, einem Abgasrückführventil und einem Abgaskühler aufweist, derart, dass Abgas zur Luftansaugleitung rückführbar ist, **dadurch gekennzeichnet, dass** die Abgasrückführeinrichtung ein Schaltventil (5) aufweist, das zwischen zwei Abgasrückführleitungen (12, 13) schaltbar ist, von denen eine Abgasrückführleitung (12) den Abgaskühler aufweist.

## Claims

1. An air intake device for an internal combustion engine comprising an air intake conduit opening into an intake pipe from which individual intake channels lead to cylinders in the internal combustion engine, said intake pipe including, in a housing, an exhaust gas recirculation means with an exhaust gas recirculation line system, an exhaust gas recirculation valve and an exhaust gas cooler, such that exhaust gas can be recirculated to the air intake conduit, **characterized in that** the exhaust gas recirculation means comprises switching valve (5) switchable between two exhaust gas recirculation lines (12, 13), of which one exhaust gas recirculation line (12) comprises the exhaust gas cooler.

## Revendications

1. Dispositif d'aspiration d'air pour un moteur à combustion interne, comprenant une conduite d'aspiration d'air débouchant dans un tuyau d'aspiration à partir duquel des canaux d'aspiration individuels s'étendent vers des cylindres du moteur à combustion interne, le tuyau d'aspiration comprenant, dans un boîtier, un moyen de recyclage des gaz d'échappement incluant un système de tuyaux de recyclage des gaz d'échappement, une soupape de recyclage des gaz d'échappement et un refroidisseur pour les gaz d'échappement, de sorte que des gaz d'échappement peuvent être recyclés vers la conduite d'aspiration d'air, **caractérisé en ce que** la moyen de recyclage des gaz d'échappement comprend une soupape de commutation (5) commutable entre deux tuyaux de recyclage des gaz d'échappement (12, 13), dont l'un des tuyaux de recyclage des gaz d'échappement (12) comprend le refroidisseur pour les gaz d'échappement.
